## Europäisches Patentamt
## European Patent Office
## Office européen des brevets

(19)

(11) Numéro de publication: **0 236 149 B1**

(12)

# FASCICULE DE BREVET EUROPEEN

(45) Date de publication du fascicule du brevet: **14.06.89**

(51) Int. Cl.⁴: **G21C 17/10**

(21) Numéro de dépôt: **87400051.6**

(22) Date de dépôt: **12.01.87**

(54) Dispositif de maintien transversal d'un conduit tubulaire tel qu'un doigt de gant dans un réacteur nucléaire à eau sous pression.

(30) Priorité: **03.02.86 FR 8601454**

(43) Date de publication de la demande: **09.09.87 Bulletin 87/37**

(45) Mention de la délivrance du brevet: **14.06.89 Bulletin 89/24**

(84) Etats contractants désignés: **BE DE ES NL**

(56) Documents cités:
FR-E- 73 582
GB-A- 2 064 231
US-A- 2 719 823
US-A- 3 766 005

(73) Titulaire: **FRAMATOME, Tour Fiat 1 place de la Coupole, F-92400 Courbevoie(FR)**

(72) Inventeur: **Heuze, Alain, 39, rue d'Amsterdam, F-75008 Paris(FR)**
Inventeur: **Cauquelin, Claude, 3 rue Appolinaire Saint-Germain de la Grange, F-78640 Neauphles le Chateau(FR)**

(74) Mandataire: **Moncheny, Michel et al, c/o Cabinet Lavoix 2 Place d'Estienne d'Orves, F-75441 Paris Cedex 09(FR)**

**Description**

L'invention concerne un dispositif de maintien transversal d'un conduit tubulaire mobile tel qu'un doigt de gant d'un réacteur nucléaire à eau sous pression destiné à recevoir un détecteur de flux neutronique pour son déplacement dans un tube guide d'un assemblage combustible.

Les réacteurs nucléaires à eau sous pression comportent un coeur formé d'assemblages de forme prismatique disposés verticalement et reposant sur une plaque de support à l'intérieur de la cuve du réacteur nucléaire.

Pendant le fonctionnement du réacteur nucléaire, il est nécessaire de réaliser périodiquement des mesures de flux neutronique à l'intérieur même du coeur. On utilise pour cela des détecteurs à fission de très petite dimension qui sont déplacés par commande à distance, à l'aide de câbles téléflex, à l'intérieur de tubes fermés à l'une de leurs extrémités appelés doigts de gant. Les doigts de gants sont introduits dans certains assemblages combustibles disposés suivant une répartition prédéterminée dans le coeur. Par déplacement des détecteurs de flux à l'intérieur des doigts de gant introduits dans les assemblages combustibles, on peut effectuer des mesures de flux suivant toute la hauteur du coeur. Les doigts de gant doivent pouvoir être extraits des assemblages du coeur, par exemple pour faciliter les opérations de rechargement du coeur du réacteur ; pour cela, on exerce une traction sur l'extrémité des doigts de gant, depuis un local d'instrumentation disposé latéralement par rapport au puits de cuve du réacteur.

Les doigts de gant doivent donc être guidés depuis le local d'instrumentation jusqu'à la cuve puis à l'intérieur de la cuve, entre le fond bombé infé rieur de cette cuve et l'extrémité d'entrée des tubes guides des assemblages correspondants. Pour cela, chacun des doigts de gant est introduit dans le passage interne cylindrique et rectiligne d'un ensemble de guidage qui comporte en particulier un tube de guidage passant dans une manchette de traversée du fond de cuve, une colonne de guidage et une ouverture traversant la plaque inférieure de coeur dans le prolongement du tube guide de l'assemblage.

Ce passage cylindrique de traversée du doigt de gant présente un diamètre généralement décroissant depuis le fond de cuve jusqu'à l'assemblage combustible, ce diamètre restant toutefois sensiblement supérieur au diamètre extérieur du doigt de gant, pour permettre une introduction et un déplacement facilités de ce doigt de gant dans le passage de traversée.

La partie terminale de l'ensemble de guidage est généralement constituée par une douille fixée sur la face supérieure de la plaque de coeur dans le prolongement de l'ouverture traversant cette plaque. On ménage néanmoins un espace entre l'extrémité de cette douille et l'entrée du tube guide de l'assemblage combustible pour faciliter la mise en place de cet assemblage lors du rechargement du réacteur et pour permettre les déplacements accompagnant la dilatation différentielle de l'assemblage combustible par rapport aux équipements internes inférieurs du réacteur.

L'eau sous pression de refroidissement du réacteur qui circule à grande vitesse dans la cuve provoque la mise en vibration des doigts de gant et des chocs de ces doigts de gant sur les parois du passage interne de l'ensemble de guidage dans lequel le doigt de gant est monté avec un certain jeu.

L'eau sous pression en circulation dans des directions transversales agit sur le doigt de gant, dans la zone où celui-ci n'est pas protégé par un moyen de guidage, avant son entrée dans le tube guide de l'assemblage. L'eau sous pression parcourt également le passage interne cylindrique de l'ensemble de guidage dans sa direction axiale et cet écoulement turbulent entraîne également des vibrations et des chocs du doigt de gant contre les parois de la traversée.

Il en résulte une usure excessive et éventuellement des détériorations des doigts de gant, dans le réacteur en service.

Le but de l'invention est donc de proposer un dispositif de maintien transversal d'un conduit tubulaire mobile dans la direction axiale d'un passage interne cylindrique rectiligne d'un diamètre sensiblement supérieur au diamètre du conduit, ménagé dans un ensemble de guidage du conduit, ce dispositif utilisable en particulier pour le maintien transversal d'un doigt de gant dans un réacteur nucléaire à eau sous pression permettant d'éviter les vibrations et les chocs du conduit tubulaire dans son passage de guidage, tout en maintenant la possibilité d'introduire et de déplacer facilement ce conduit tubulaire dans le passage et tout en maintenant une section libre entre le conduit et la surface interne du passage d'une étendue sensiblement constante suivant la longueur du passage.

Dans ce but, le dispositif de maintien comporte, sur une partie au moins de la longueur du passage interne de l'ensemble de guidage, un tube de maintien dont la section droite par un plan perpendiculaire à l'axe du passage cylindrique est sensiblement circulaire et qui possède un diamètre intérieur supérieur au diamètre externe du conduit, ce tube de maintien présentant des déformations dans les directions radiales régulièrement réparties suivant sa longueur, de telle sorte qu'un premier cylindre à génératrices droites coaxial au passage cylindrique et inscrit dans le tube de maintien ait un diamètre inférieur au diamètre intérieur du conduit et qu'un second cylindre à génératrices droites coaxial au passage cylindrique et circonscrit au tube de maintien ait un diamètre supérieur au diamètre minimal du passage cylindrique.

Afin de bien faire comprendre l'invention, on va maintenant décrire, à titre d'exemple non limitatif, en se référant aux figures jointes en annexe, un mode de réalisation d'un dispositif de maintien suivant l'invention dans le cas où le conduit tubulaire est un doigt de gant dans lequel on déplace un capteur de flux neutronique, dans un réacteur nucléaire à eau sous pression.

Dans ces figures :

- la figure 1 est une vue en coupe par un plan vertical de la partie inférieure de la cuve d'un réacteur nucléaire à eau sous pression comportant plusieurs ensembles de guidage de doigts de gant ;
- la figure 2 est une vue en coupe par un plan vertical d'une partie du passage interne de l'ensemble de guidage d'un doigt de gant dans laquelle est disposé un tube de maintien suivant l'invention ;
- la figure 3 est une vue en coupe suivant III-III de la figure 2 ;
- la figure 4 est une vue en coupe par un plan vertical de la partie supérieure d'un passage de guidage d'un doigt de gant équipé d'un tube de maintien suivant l'invention.

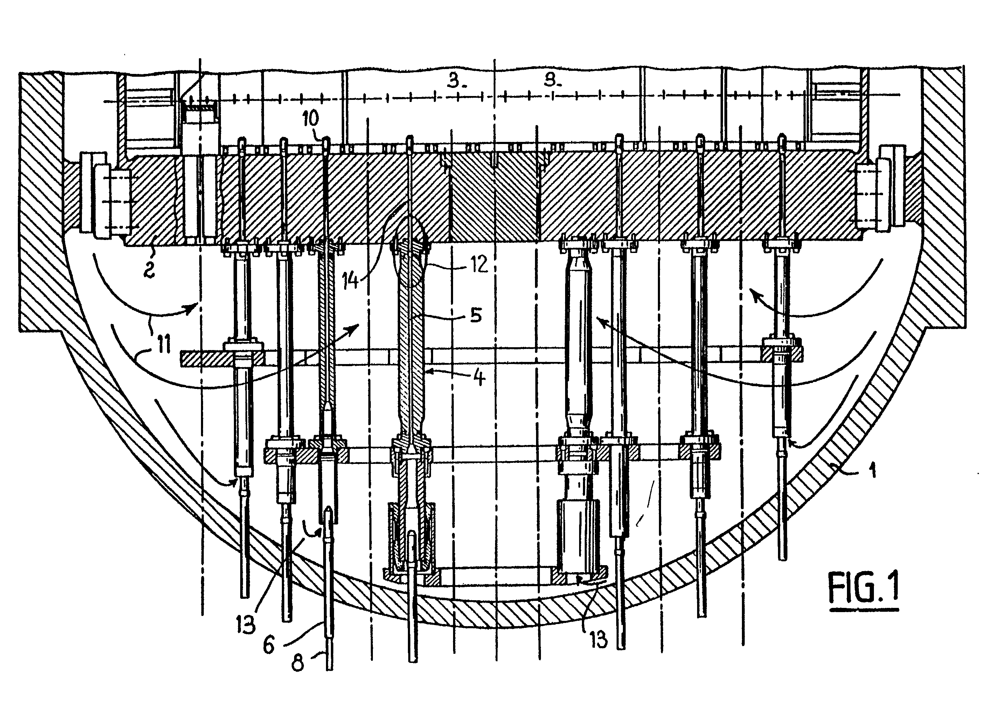

Sur la figure 1, on voit le fond de cuve bombé 1 d'un réacteur nucléaire à eau sous pression ainsi que la plaque inférieure de coeur 2 sur laquelle viennent reposer les assemblages combustibles 3 constituant le coeur du réacteur. Entre le fond 1 et la plaque 2 sont disposés des ensembles de guidage 4 comportant un passage interne 5 cylindrique et rectiligne, d'un diamètre supérieur au diamètre extérieur du doigt de gant. Ces ensembles 4 comportent en particulier des manchettes 6 traversant le fond bombé 1 de la cuve et débouchant dans la partie supérieure de l'ensemble de guidage fixée sur la face inférieure de la plaque de coeur 2 et constituée par une colonne de guidage. Les doigts de gant sont introduits dans un tube de guidage 8 fixé à l'intérieur de la manchette 6 à l'une de ses extrémités et débouchant dans la salle d'instrumentation attenante au puits de cuve du réacteur à son autre extrémité. Les doigts de gant parviennent ainsi dans le passage de traversée 5 de l'ensemble de guidage dont le diamètre est décroissant entre l'orifice d'introduction de la manchette 6 et une douille 10 fixée sur la plaque 2 dans le prolongement d'une ouverture 14 traversant la plaque de coeur 2 sur toute son épaisseur. Ce passage interne 5 constitué par des parties successives cylindriques et rectilignes coaxiales présente un diamètre qui est sensiblement supérieur au diamètre extérieur du doigt de gant, même dans sa partie de plus faible diamètre.

L'eau sous pression circulant dans la partie inférieure de la cuve du réacteur, par exemple suivant la direction des flèches 11 peut pénétrer dans le passage interne de guidage 5, comme il est figuré par les flèches 13, et circuler dans ce passage interne 5 suivant la direction axiale. Cet écoulement d'eau sous pression fortement perturbé à un régime turbulent et peut provoquer la mise en vibration du doigt de gant dans le passage 5 et entraîner des chocs du doigt de gant contre la paroi interne du passage 5. De même, la circulation d'eau sous pression dans des directions transversales par rapport à l'axe du passage 5, dans des zones où le doigt de gant n'est pas protégé, peut provoquer les mêmes phénomènes entraînant une usure ou des détériorations du tube.

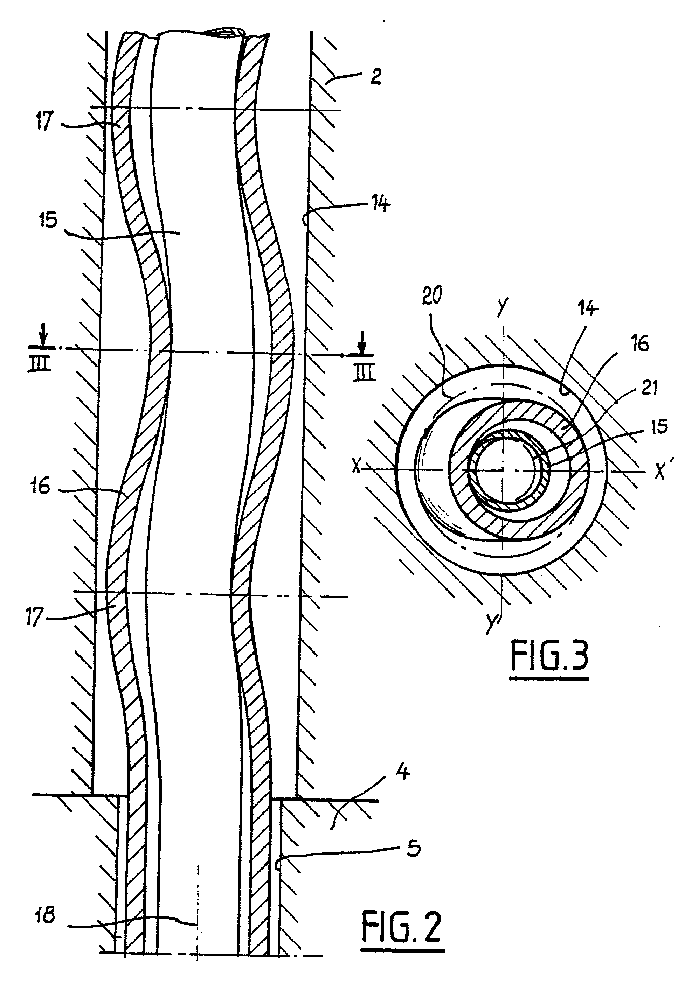

On va maintenant décrire, en se référant aux figures 2 et 3, le dispositif de maintien transversal du doigt de gant selon l'invention. La figure 2 représente une vue agrandie du détail 12 de la figure 1, c'est-à-dire le passage interne de l'ensemble de guidage, au niveau de l'ouverture 14 dans la plaque de coeur 2 et de la partie supérieure du passage de traversée de la colonne 4. Dans cette zone, le doigt de gant 15 constituant un conduit tubulaire de guidage d'un détecteur de flux neutronique fermé à sa partie supérieure non représentée est introduit à l'intérieur d'un tube de maintien 16 dont la section circulaire est représentée sur la figure 3. Le diamètre intérieur de ce tube 16 est sensiblement supérieur au diamètre extérieur du doigt de gant 15 alors que le diamètre extérieur de ce tube 16 est sensiblement inférieur au diamètre du passage cylindrique rectiligne 5 aussi bien dans sa partie 14 de traversée de la plaque 2 que dans sa partie de traversée de la colonne 4.

Comme il est visible sur la figure 2, le tube de maintien 16 présente des ondulations successives 17 disposées de façon régulièrement espacée dans la direction de l'axe 18 du passage 5.

Ces ondulations peuvent être obtenues par pliages alternés d'un tube droit avec un axe de pliage de direction constante, dans le cas présent de direction perpendiculaire au plan de la figure 2. On obtient ainsi des déformations radiales du tube dans une seule direction correspondant à l'axe XX' de la figure 3, le tube ne subissant pas de déformation dans la direction radiale YY'.

On voit que le tube de maintien 16 obtenu est tel qu'il puisse être circonscrit dans un cylindre à génératrice droite ayant pour axe l'axe 18 du passage 5 dont la section circulaire 20 est visible sur la figure 3. Un cylindre à génératrice droite d'axe 18 peut également être inscrit à l'intérieur du tube 16 ; la section circulaire 21 de ce cylindre inscrit est représentée sur la figure 3.

Selon l'invention, le cylindre circonscrit au tube de maintien 16 a un diamètre sensiblement supérieur au diamètre intérieur du passage 5. De même, le cylindre inscrit 21 a un diamètre sensiblement inférieur au diamètre intérieur du doigt de gant 15. Lorsqu'on introduit le doigt de gant dans le passage interne 5 de l'ensemble de guidage et lorsque ce doigt de gant 15 pénètre dans le tube de maintien 16, il doit se déformer suivant une forme semblable à la forme du tube 16 pour passer dans l'espace intérieur de ce tube de maintien puisque le passage libre en ligne droite dans ce tube a un diamètre inférieur au diamètre extérieur du doigt de gant.

Comme il est visible sur la figure 2, le tube 16 et le doigt de gant 15 ont alors leurs génératrices sous forme de sinusoïde et sont en appui mutuel en des points régulièrement espacés suivant la direction axiale 18 du passage 5.

La progression du doigt de gant 15 à l'intérieur du tube 16 se poursuit par déformations alternées du doigt de gant jusqu'au moment où ce doigt de gant a pénétré dans l'assemblage combustible jusqu'à sa partie supérieure, par le tube guide d'instrumentation de cet assemblage. La partie du doigt de gant 15 située dans le tube de maintien 16 est alors déformée de façon alternée comme représenté sur la figure 2. Le doigt de gant est alors maintenu transversalement par la paroi du tube de maintien 16 qui présente une certaine rigidité. D'autre part, la mise en place du doigt de gant 15 à l'intérieur du tube 16 est facilitée par le fait que le tube 16 n'est pas en appui contre les parois du passage 5 et peut donc se déformer légèrement dans la direction radiale pour libérer le doigt de gant. Pendant le fonctionnement du réacteur nucléaire, l'eau sous pression exerce des forces radiales sur le doigt de gant 15 ; ces forces radiales ne permettent pas le déplacement du doigt de gant qui est en appui transversal contre le tube de maintien 16.

En outre, la section de passage de l'eau sous pression entre le doigt de gant 15 et la surface interne du tube 16 est pratiquement constante sur toute la longueur du guidage, grâce à la forme alternée des déformations radiales du tube 16.

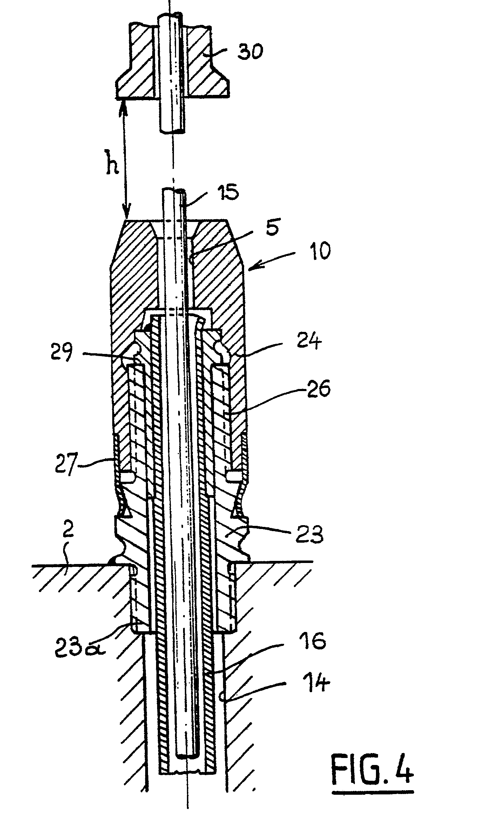

Sur la figure 4, on voit la partie supérieure de l'ensemble de guidage comportant une douille 10 formée de deux parties 23 et 24. La partie 23 comporte un embout fileté 23a venant se fixer dans un trou taraudé ménagé dans la plaque de coeur 2 à la sortie de l'ouverture 14 traversant cette plaque. Un cordon de soudure 25 permet de fixer à demeure la partie 23 de la douille sur la plaque 2.

La partie 24 de la douille comporte un taraudage 26 destiné à assurer la fixation par vissage de la partie 24 sur l'extrémité filetée de la partie 23. Des lames 27, fixées à leurs extrémités sur la partie 24, sont rabattues dans des encoches de la partie 23 ; elles permettent d'assurer l'indéserrabilité de l'assemblage entre ces parties 23 et 24 de la douille et d'autoriser le démontage éventuel.

L'extrémité du tube de maintien 16 est fixée à l'intérieur de la douille 10 par l'intermédiaire d'un manchon de fixation 29 ayant une collerette supérieure venant en appui sur l'extrémité de la partie 23 de la douille. Le tube de maintien 16 comporte une partie d'extrémité droite, c'est-à-dire ne présentant pas d'ondulations, qui est introduite à l'intérieur du manchon 29 et fixée sur celui-ci.

La partie terminale du passage de guidage 5 du doigt de gant 15 est constituée par l'alésage central de la partie 24 de la douille 10. L'extrémité 30 du tube guide de l'assemblage dans lequel on introduit le doigt de gant est situé au-dessus de la douille 10 avec un certain espacement de hauteur h.

On voit que lorsqu'il est introduit dans le tube guide 30, le doigt de gant 15 maintenu par le tube 16 dans la partie inférieure de la douille 10 et à l'intérieur de l'ouverture 14 de la plaque de coeur 2 ne subit pas de déplacements transversaux, par exemple sous l'effet du courant d'eau sous pression venant en contact du doigt de gant entre la douille 10 et l'extrémité du tube guide 30.

Le dispositif de maintien transversal suivant l'invention a donc l'avantage d'être d'une grande efficacité malgré une très grande simplicité de conception et de mise en place dans le passage de guidage du réacteur. D'autre part, le dispositif de maintien présente l'avantage de ne comporter qu'une seule pièce fixée rigidement sur les équipements internes du réacteur. On évite ainsi toute détérioration qui pourrait survenir dans le cas d'un dispositif comportant des éléments mobiles.

L'invention ne se limite pas au mode de réalisation qui vient d'être décrit.

C'est ainsi qu'on peut imaginer d'autres formes du tube de maintien que la forme à "ondulations planes" qui a été décrite. Le tube peut par exemple présenter une ondulation continue et hélicoïdale de façon que le doigt de gant vienne en appui dans ce tube suivant une zone hélicoïdale continue ou suivant des zones successives en forme de portions d'hélice. Le tube de maintien pourrait également posséder des indentations discontinues alternées axialement réduisant la section interne libre de passage en ligne droite jusqu'à une valeur inférieure à la section extérieure du doigt de gant.

Le tube de maintien peut être réalisé en tout matériau approprié, par exemple en acier inoxydable ou en alliage de nickel, dans le cas où il sert au maintien d'un doigt de gant à l'intérieur de la cuve d'un réacteur nucléaire à eau sous pression.

La fixation du tube de maintien dans le passage interne de l'ensemble de guidage peut être réalisée d'une façon différente de celle qui a été décrite et le tube de maintien réalisé sous forme d'un tube continu ou de portions de tube successives peut être disposé dans une partie quelconque du passage interne de l'ensemble de guidage ; on cherchera à disposer ce tube de maintien dans la ou les zones du passage interne de guidage où le doigt de gant ou autre conduit tubulaire est le plus sollicité par des contraintes externes.

Enfin, le dispositif de maintien transversal suivant l'invention s'applique à des conduits tubulaires différents de doigts de gant d'un réacteur nucléaire à eau sous pression.

**Revendications**

1.- Dispositif de maintien transversal d'un conduit tubulaire (15) mobile dans la direction axiale d'un passage interne cylindrique rectiligne (5) d'un diamètre sensiblement supérieur au diamètre du conduit (15) ménagé dans un ensemble de guidage (4) du conduit (15), caractérisé par le fait qu'il comporte, sur une partie au moins de la longueur du passage interne (5) de l'ensemble de guidage, un tube de maintien (16) dont la section droite par un plan perpendiculaire à l'axe (18) du passage cylindrique (5) est sensiblement circulaire et qui possède un diamètre intérieur supérieur au diamètre extérieur du conduit (15), ce tube de maintien (16) présentant des déformations (17) dans des directions radiales, régulièrement réparties suivant sa longueur, de telle sorte qu'un premier cylindre (21) à génératrices droites coaxial au passage cylindrique (5) et inscrit dans le tube de maintien (16) ait un diamètre inférieur au diamètre intérieur du conduit (15) et qu'un second cylindre (20) à génératrices droites coaxial au passage cylindrique (5) et circonscrit au tube de maintien (16) ait un diamètre supérieur au diamètre minimal du passage cylindrique (5).

2.- Dispositif de maintien transversal suivant la revendication 1, caractérisé par le fait que le tube de maintien (16) présente des ondulations (17) successives suivant sa longueur dirigées dans une seule direction radiale, de façon que les génératrices correspondantes du tube de maintien (16) ait une forme sensiblement sinusoïdale.

3.- Dispositif de maintien transversal suivant la revendication 1, caractérisé par le fait que le tube de maintien (16) présente une déformation radiale continue ou discontinue disposée suivant une ou plusieurs hélices ayant un axe sensiblement confondu avec l'axe (18) du passage cylindrique (5).

4.- Dispositif de maintien transversal suivant la revendication 1, caractérisé par le fait que le tube de maintien (16) présente des indentations de direction radiale alternées axialement à des intervalles réguliers suivant sa longueur dirigées vers l'intérieur du tube de maintien (16).

5.- Dispositif de maintien transversal suivant l'une quelconque des revendications 1 à 4, dans le cas où le conduit tubulaire (15) est un conduit de guidage d'un moyen de mesure de flux neutronique ou doigt de gant mobile dans un tube guide (30) d'un assemblage combustible (3) d'un réacteur nucléaire à eau sous pression, caractérisé par le fait que le tube de maintien (16) est disposé à l'intérieur d'une partie de l'ensemble de guidage du doigt de gant entre le fond de cuve (1) du réacteur et l'entrée du tube guide (30) de l'assemblage combustible (3), comportant au moins une partie de l'ouverture (14) traversant la plaque inférieure de coeur (2).

6.- Dispositif de maintien transversal suivant la revendication 5, caractérisé par le fait que le tube de maintien (16) est fixé à son extrémité voisine de l'entrée du tube guide (30), de façon démontable, dans une douille (10) fixée sur la plaque inférieure de coeur (2).

## Claims

1. A device for the lateral support of a tubular conduit (15) which can move in the axial direction of an internal rectilinear cylindrical passage (5), having a diameter substantially larger than the diameter of the conduit (15), provided in a guide assembly (4) of the conduit (15), characterized in that it comprises, over at least a portion of the length of the internal passage (5) of the guide assembly, a support tube (16) whose cross-section through a plane perpendicular to the axis (18) of the cylindrical passage (5) is substantially circular and which has an internal diameter larger than the external diameter of the conduit (15), the support tube (16) having deformations (17) in radial directions which are regularly spaced out along its length, so that a first cylindrical passage (5) and inscribed in the support tube (16) has a diameter smaller than the internal diameter of the conduit (15) and a second cylinder (20) of straight generatrices which is coaxial with the cylindrical passage (5) and circumscribed on the support tube (16) has a diameter larger than the minimum diameter of the cylindrical passage (5).

2. A lateral support device according to claim 1, characterized in that the support tube (16) has successive undulations (17) along its length which are directed in a single radial direction, so that the corresponding generatrices of the support tube (16) have a substantially sinusoidal shape.

3. A lateral support device according to claim 1, characterized in that the support tube (16) has a continuous or discontinuous radial deformation disposed along one or more helixes having an axis which substantially coincides with the axis (18) of the cylindrical passage (5).

4. A lateral support device according to claim 1, characterized in that the support tube (16) has indentations of radial direction alternating axially at regular intervals along its length and directed towards the inside of the support tube (16).

5. A lateral support device according to any of claims 1 to 4, wherein the tubular conduit (15) is a guide conduit for a neutron flux measuring means or a glove finger moving in a guide tube (30) of a fuel assembly (3) of a pressurized water nuclear reactor, characterized in that the support tube (16) is disposed inside a portion of the guide assembly for the glove finger between the bottom of the reactor vessel (1) and the inlet of the guide tube (30) of the fuel assembly (3), comprising at least a portion of the aperture (14) with which the lower plate of the core (2) is formed.

6. A lateral support device according to claim 5, characterized in that the support tube (16) is fixed at its end adjacent the inlet of the guide tube (30) in a demountable manner in a bush (10) attached to the lower plate of the core (2).

## Patentansprüche

1. Vorrichtung zur seitlichen Halterung einer rohrförmigen Leitung (15), welche in axialer Richtung eines zylindrischen geradlinigen Innenkanals (5) bewegbar ist, der einen Durchmesser aufweist, der etwas größer ist als der Durchmesser der Leitung (15), ausgebildet in einer Führungsanordnung (4) der Leitung (15), dadurch gekennzeichnet, da sie auf wenigstens einem Bereich der Länge des Innenkanals (5) der Führungsanordnung ein Halterungsrohr (16) aufweist, dessen Querschnitt in einer zur Achse (18) des zylindrischen Kanals (5) senkrechten Ebene im wesentlichen kreisförmig ist, und der einen Innendurchmesser aufweist, der größer ist als der Außendurchmesser der Leitung (15), wobei das Halterungsrohr (16) Deformationen (17) in radialen Richtungen aufweist, die regelmäßig über seine Länge verteilt angeordnet sind, derart, daß ein erster Zylinder (21) mit geraden Erzeugenden, die koaxial zum zylindrischen Kanal (5) verlaufen und in dem Halterungsrohr (16) verlaufen, einen Durchmesser aufweist, der geringer ist als der Innendurchmesser der Leitung (15), und daß ein zweiter Zylinder (20) mit geraden Erzeugenden, die koaxial zum zylindrischen Kanal (5) laufen und außen (circinscrit) am Halterungsrohr (10) verlaufen, einen Durchmesser aufweist, der größer ist als der minimale Durchmesser des zylindrischen Kanals (5).

2. Vorrichtung zur seitlichen Halterung nach Anspruch 1, dadurch gekennzeichnet, daß das Halterungsrohr (16) aufeinanderfolgende Ausbiegungen oder Wellen (17) entlang seiner Länge aufweist, die in eine einzige radiale Richtung derart ausgerichtet sind, daß die Erzeugenden oder Mantellinien, die dem Halterungsrohr (16) entsprechen, im wesentlichen sinusförmig sind.

3. Vorrichtung zur seitlichen Halterung nach Anspruch 1, dadurch gekennzeichnet, daß das Halterungsrohr (16) eine radiale kontinuierliche oder diskontinuierliche Ausbuchtung aufweist, die entland einer oder mehrerer Schrauben angeordnet sind, die eine Achse aufweisen, die im wesentlichen mit der Achse (18) des zylindrischen Kanals (5) zusammenfällt.

4. Vorrichtung zur seitlichen Halterung nach Anspruch 1, dadurch gekennzeichnet, daß das Halterungsrohr (16) Ausbuchtungen von radialer Richtung aufweist, die axial alternierend mit regelmäßigen Abständen über seine Länge in das Innere des Halterungsrohrs (16) gerichtet sind.

5. Vorrichtung zur seitlichen Halterung nach einem der Ansprüche 1 bis 4, für den Fall, wo die rohrförmige Leitung (15) eine Führungsleitung einer Meßeinrichtung des Neutronenflusses oder eine bewegliche Fingersonde in einem Führungsrohr (30) einer Verbrennungsanordnung (3) eines Druckwasserkernreaktors ist, dadurch gekennzeichnet, daß das Halterungsrohr (16) im Inneren eines Bereiches der Führungsanordnung der Fingersonde zwischen dem Boden des Behälters (1) des Reaktors und dem Eingang des Führungsrohres (30) der Verbrennungsanordnung (3) angeordnet ist, die wenigstens einen Öffnungsbereich (14) aufweist, der die untere Platte eines Kerns (2) durchquert.

6. Vorrichtung zur seitlichen Halterung nach Anspruch 5, dadurch gekennzeichnet, daß das Halterungsrohr (16) an seinem Ende in der Nähe des Eingangs bzw. Eintritts des Führungsrohrs (30) lösbar in einer Hülse (10) befestigt ist, welche an der unteren Platte des Kerns (2) befestigt ist.

FIG.1

EP 0 236 149 B1

FIG.2

FIG.3

FIG. 4